(19)

Europäisches
Patentamt
European
Patent Office
Office européen
des brevets

(11) **EP 3 191 927 B1**

(12) **EUROPEAN PATENT SPECIFICATION**

(45) Date of publication and mention
of the grant of the patent:
**15.03.2023 Bulletin 2023/11**

(51) International Patent Classification (IPC):
**G06F 3/04817** (2022.01)    **G06F 3/0486** (2013.01)
**G06F 3/04842** (2022.01)    **G06F 3/0488** (2013.01)

(21) Application number: **15840855.9**

(22) Date of filing: **10.09.2015**

(52) Cooperative Patent Classification (CPC):
**G06F 3/04817; G06F 3/0482; G06F 3/04842;
G06F 3/04845; G06F 3/0486; G06F 3/0488;
H04M 1/724;** G06F 2203/04802; G06F 2203/04806;
H04M 2250/22

(86) International application number:
**PCT/KR2015/009531**

(87) International publication number:
**WO 2016/039570 (17.03.2016 Gazette 2016/11)**

(54) **METHOD AND DEVICE FOR EXECUTING APPLICATIONS THROUGH APPLICATION SELECTION SCREEN**

VERFAHREN UND VORRICHTUNG ZUR AUSFÜHRUNG VON ANWENDUNGEN DURCH EINEN ANWENDUNGSAUSWAHLSCHIRM

PROCÉDÉ ET DISPOSITIF D'EXÉCUTION D'APPLICATIONS PAR L'INTERMÉDIAIRE D'UN ÉCRAN DE SÉLECTION D'APPLICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.09.2014 GB 201416161
05.06.2015 KR 20150080027**

(43) Date of publication of application:
**19.07.2017 Bulletin 2017/29**

(73) Proprietor: **Samsung Electronics Co., Ltd.
Gyeonggi-do 16677 (KR)**

(72) Inventors:
• **HAN, Kapsu
Ulju-gun
Ulsan 44915 (KR)**

• **GUNDAY, Noyan
London
Greater London W6 9HH (GB)**

(74) Representative: **HGF
HGF Limited
1 City Walk
Leeds LS11 9DX (GB)**

(56) References cited:
**EP-A1- 2 509 390        EP-A2- 2 426 898
JP-A- 2013 200 681      KR-A- 20130 091 182
KR-A- 20140 079 939    US-A1- 2012 030 623
US-A1- 2013 346 911**

## Description

## Technical Field

Methods and apparatuses consistent with exemplary embodiments relate to executing applications.

## Background Art

Modern electronic devices such as tablet computers and smartphones are capable of performing a wide variety of functions. A display device may include various applications that may be executed by a user in order to perform different functions.

The applications, which are commonly referred to as 'apps', may be pre-installed by a manufacturer and/or may be installed by a user. The user may install a plurality of applications in a display device. In a user interface, icons for executing the installed applications may be selected through a user interface. The user interface may include many pages of application selection screens, each displaying a limited number of icons. However, as the number of applications installed on the display device increases, it may be difficult for the user to navigate the application selection screens and locate a desired application. This is particularly problematic in display devices which only have limited display resources, such as smartphones in which a display may only be several inches across.

European patent application EP2426898 describes a mobile terminal that includes: a display for displaying a folder icon corresponding to at least one application; a communication unit for receiving update information corresponding at least partially to the at least one application; and a controller for controlling the display to display the folder icon and, upon receipt of the update information by the communication unit, for controlling the display to display a graphical object indicating the receipt of the update information and corresponding to the folder icon.

## Disclosure of Invention

## Solution to Problem

Aspects of the exemplary embodiments relate to methods and apparatuses for executing applications through an application selection screen.

## Advantageous Effects of Invention

The exemplary embodiments have been described in which application icons are contained within entities that may be dynamically manipulated to arrange the icons in a more efficient manner, for example by creating group entities which include one or more application icons while occupying a relatively small display area.

Some exemplary embodiments are implemented in a multi-touch device, with the result that multiple users may simultaneously execute different applications and manipulate displayed entities, for example by merging, splitting, rotating and/or zooming different ones of the displayed entities. As an example, one user may drag an entity towards a group entity in order to merge two entities, whilst another user simultaneously drags an application icon out of the same group entity in order to create a new entity.

## Brief Description of Drawings

The above and/or other aspects will become apparent and more readily appreciated from the following description of the exemplary embodiments, taken in conjunction with the accompanying drawings in which:

FIG. 1 illustrates an application selection screen including a plurality of entities, according to an exemplary embodiment;
FIGS. 2A to 2C illustrate operations of creating a merged entity, according to an exemplary embodiment;
FIGS. 3A to 3C illustrate operations of splitting an entity which contains a plurality of icons, according to an exemplary embodiment;
FIGS. 4A to 4C illustrate executing various applications from a group entity, according to an exemplary embodiment;
FIGS. 5A and 5B illustrate rotating a group entity, according to an exemplary embodiment;
FIGS. 6A and 6B illustrate rearranging icons within a group entity while zooming, according to an exemplary embodiment;
FIG. 7 illustrates an application selection screen including a plurality of entities and a group entity, according to an exemplary embodiment;
FIGS. 8A to 8C illustrate scrolling through applications within a 2-dimensional group entity, according to an exemplary embodiment;
FIG. 9 is a flowchart of a method of controlling a display device, according to an exemplary embodiment;
FIG. 10 is a flowchart of a method of rotating icons within a three-dimensional entity, according to an exemplary embodiment;
FIG. 11 is a flowchart of a method of merging entities in an application selection screen, according to an exemplary embodiment;
FIG. 12 is a flowchart of a method of splitting an entity in an application selection screen, according to an exemplary embodiment;
FIG. 13 is a flowchart of a method of resizing an entity in an application selection screen, according to an exemplary embodiment;
FIG. 14 is a flowchart of a method of scrolling through application icons within a two-dimensional entity in an application selection screen, according to an exemplary embodiment;
FIG. 15 illustrates a display device capable of executing a plurality of applications, according to an exemplary embodiment; and
FIG. 16 illustrates a display device, according to an exemplary embodiment.

## Best Mode for Carrying out the Invention

Aspects of the exemplary embodiments relate to methods and apparatuses for executing applications through an application selection screen.

Additional aspects will be set forth in part in the description which follows and, in part, will be apparent from the description, or may be learned by practice of the presented exemplary embodiments.

The present invention is defined by the independent claims. Further aspects of the present invention are outlined in the dependent claims. When the term "embodiment" is used for describing an unclaimed combination of features, it has to be understood as referring to examples useful for understanding the present invention. According to an aspect of an exemplary embodiment, a method of operating a display device includes displaying one or more entities and one or more application icons associated with the one or more entities on an application selection screen; receiving a first input selecting an application icon of the one or more application icons, while continuing to display the application selection screen; and executing an application associated with the selected application icon, in response to the first input.

The method further includes, in response to receiving a touch input selecting a first entity of the one or more entities and dragging the first entity to a second entity of the one or more entities, wherein a first application icon of the one or more application icons is displayed inside the first entity, and a second application icon of the one or more application icons is displayed inside the second entity, merging the first entity with the second entity to create a merged entity; and displaying the first application icon and the second application icon inside the merged entity.

The method may further include determining a display size of the merged entity based on the number of the one or more application icons displayed inside in the merged entity; and displaying the merged entity in accordance with the determined display size.

The determining of the display size may include limiting the display size of the merged entity to a maximum display size, wherein the maximum display size is based on an upper limit.

The method may further include determining a maximum number of the one or more application icons to be displayed inside the merged entity; and displaying a number of application icons inside the merged entity, wherein the number of application icons is less than the maximum number.

The displaying may include: displaying the one or more entities as three-dimensional objects, and displaying two or more of the application icons inside the one or more entities in a manner that indicates that the two or more application icons have different depths.

The method may further include determining a new arrangement of the two or more application icons in accordance with a user input for rotation of the one or more entities; and displaying the two or more application icons using the new arrangement, while continuing to display the application selection screen.

The displaying may include displaying the one or more entities as two-dimensional objects; determining a new arrangement of the application icons included in the one or more entities in accordance with a user input of scrolling through the one or more entities; and displaying the application icons included in the one or more entities using the new arrangement, while continuing to display the application selection screen.

The method may further include receiving an input selecting a first application icon displayed inside a first entity of the one or more entities, wherein a second application icon is also displayed inside the first entity; receiving an input dragging the first application icon outside the first entity; creating a second entity; and displaying the second application icon inside the first entity and the first application icon inside the second entity.

The method may further include determining a new display size of the one or more entities based on a user input for resizing the one or more entities; and displaying the one or more entities in accordance with the determined new display size.

According to another aspect of an exemplary embodiment, a display device includes a display unit; one or more processors; and a memory configured to store computer program instructions executable by the one or more processors, including computer program instructions for: displaying one or more entities and one or more application icons associated with the one or more entities on an application selection screen; receiving a first input selecting an application icon of the one or more application icons, while continuing to display the application selection screen; and executing an application associated with the selected application icon, in response to the first input.

The memory may further store computer program instructions for: in response to receiving a touch input selecting a first entity among the one or more entities and dragging the first entity to a second entity of the one or more entities, wherein a first application icon of the one or more application icons is displayed inside the first entity, and a second application icon of the one or more application icons is displayed inside the second entity, merging the first entity with the second entity and creating a merged entity; and displaying the first application icon and the second application icon inside the merged entity.

The memory may further store computer program instructions for: determining a display size of the merged entity based on the number of the one or more application icons included in the merged entity; and displaying the merged entity in accordance with the determined display size.

The memory may further store computer program instructions for: limiting the display size of the merged entity to a maximum display size, wherein the maximum display size is based on an upper limit.

The memory may further store computer program instructions for: determining a maximum number of the one or more application icons to be displayed inside the merged entity; and displaying a number of application icons inside the merged entity, wherein the number of application icons is less than the maximum number.

The memory may further store computer program instructions for: displaying the one or more entities as three-dimensional objects and displaying two or more of the application icons inside the one or more entities in a manner that indicates that the two or more application icons have different depths.

The memory may further store computer program instructions for: determining a new arrangement of the two or more application icons in accordance with a user input for rotation of the one or more entities; and displaying the two or more application icons using the new arrangement, while continuing to display the application selection screen.

The memory may further store computer program instructions for: displaying the one or more entities as two-dimensional objects; and determining a new arrangement of the application icons included in the one or more entities in accordance with a user input of scrolling through the one or more entities; and displaying the application icons included in the one or more entities using the new arrangement, while continuing to display the application selection screen.

The memory may further store computer program instructions for: receiving an input selecting a first application icon displayed inside a first entity of the one or more entities, wherein a second application icon is also displayed inside the first entity; receiving an input dragging the first application icon outside the first entity; creating a second entity; and displaying the second application icon inside the first entity and the first application icon inside the second entity.

The memory may further store computer program instructions for: determining a new display size of the one or more entities based on a user input for resizing the one or more entities; and displaying the one or more entities in accordance with the determined new display size.

A non-transitory computer-readable storage medium may have stored thereon computer program instructions which, when executed in one or more processors, perform the methods above.

According to yet another aspect of an exemplary embodiment, a display device includes a display configured to display one or more entities and one or more application icons associated with the one or more entities on an application selection screen; a receiver configured to receive a first input selecting an application icon of the one or more application icons, while continuing to display the application selection screen; and a processor configured to execute an application associated with the selected application icon, in response to the first input.

According to a still further aspect of an exemplary embodiment, a method of operating a display device, includes displaying a first entity and a second entity on an application selection screen; displaying a first application icon inside the first entity, and a second application icon inside the second entity; receiving an input selecting the first entity and moving the first entity to within a first threshold distance from the second entity; receiving an input releasing the selection of the first entity; and in response to determining that the first entity is within a second threshold distance from the second entity when the input releasing the selection of the first entity is received, removing the first entity and displaying the first application icon and the second application icon inside the second entity.

The method may further include receiving an input for rotating the first application icon and the second application icon; and changing a position of the first application icon with respect to the second entity and a position of the second application icon with respect to the second entity in a manner that rotates the first application icon and the second application icon about a central axis of the second entity.

The method may further include receiving an input selecting a border of the second entity, dragging the border of the second entity to a new location on the application selection screen, and releasing the border of the second entity at the new location; determining a new display size of the second entity based on the new location; and displaying the second entity using the new display size.

The method may further include receiving an input selecting the first application icon and moving the first application icon outside of a third threshold distance from the second entity; receiving an input releasing the selection of the first application icon; in response to determining that the first application icon is outside of a fourth threshold distance from the second entity when the input releasing the selection of the first application icon is received, creating a third entity and displaying the first application icon inside the third entity and the second application icon inside the second entity.

According to an aspect of another exemplary embodiment, a display device includes a display; one or more processors; and a memory configured to store computer program instructions executable by the one or more processors, wherein the processor displays one or more entities each including an application icon on an application selection screen; receives a first input selecting an application icon from any one of the one or more entities, while continuing to display the application selection screen; and executes an application associated with the selected application icon, in response to the first input.

If a touch input on a first entity among the one or more entities and an input of dragging the first entity to a second entity are received, the processor may merge the first entity and the second entity and creating a merged entity; and display the application icon included in the first entity and the application icon included in the second entity inside the merged entity.

The processor may determine a display size of the merged entity based on the number of the application icons included in the merged entity; and display the merged entity in accordance with the determined display size.

The processor may add an upper limit to the display size and limit a maximum size of the merged entity.

The processor may determine a maximum number of the application icons that are to be displayed inside the merged entity; and display only application icons numbering less than the maximum number inside the merged entity.

The processor may display the one or more entities as 3D objects and display two or more of the application icons included in the entities to indicate different depths.

The processor may determine a new arrangement of the two or more application icons in accordance with a user input for rotation of the one or more entities; and display the two or more application icons again by using the new arrangement, while continuing to display the application selection screen.

The processor may display the one or more entities as 2D objects, determine a new arrangement of the application icons included in the one or more entities in accordance with a user input of scrolling through the one or more entities, and display the application icons included in the one or more entities by using the new arrangement, while continuing to display the application selection screen.

The processor may touch a first application icon in a third entity including first and second application icons, receiving an input of dragging the first application icon outside the third entity, create a new fourth entity, and display the third entity including the second application icon and the fourth entity including the first application icon.

The processor may determine a new display size of the one or more entities based on a user input for resizing the one or more entities; and display the one or more entities in accordance with the determined display size.

**Mode for the Invention**

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects.

As used herein, the term "and/or" includes any and all combinations of one or more of the associated listed items. Expressions such as "at least one of," when preceding a list of elements, modify the entire list of elements and do not modify the individual elements of the list.

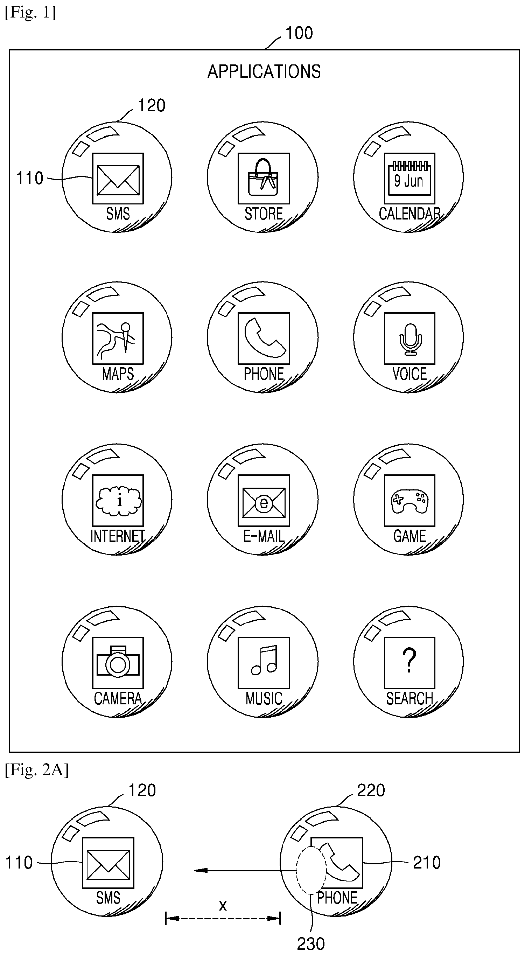

FIG. 1 illustrates an application selection screen 100 including a plurality of entities, according to an exemplary embodiment. The application selection screen 100 is implemented in a user interface of a mobile communication display device (specifically a touch-enabled smartphone). However, this is only one example of a display device. In other exemplary embodiments, the application selection screen 100 may be applied in any type of display device, including but not limited to tablet, laptop and desktop computers, wearable devices such as smart watches, television screens, integrated tabletop display screens, infotainment systems such as in-car infotainment systems, and large-screen displays for applications such as business meetings and class room teaching.

Also, although the exemplary embodiments will be described with reference to touch-screen user interfaces, other exemplary embodiments may receive a user input through different types of interfaces. For example, in other exemplary embodiments, the user input may be received through a traditional pointing display device such as a mouse, trackpad or trackball, or via a non-contact method such as speech recognition, motion tracking, eye tracking, an eye blink interface, or a BCI (brain computer interface).

The application selection screen 100 illustrated in FIG. 1 may be used to control the display device to execute one of a plurality of applications. As shown in FIG. 1, the application selection screen 100 includes a plurality of application icons 110 displayed in a plurality of entities 120. In the exemplary embodiment, each entity 120 is displayed as a two-dimensional (2D) representation of a three-dimensional (3D) object, which in the exemplary embodiment is a translucent, substantially spherical bubble. The entities 120 may include suitable shading and/or highlights configured to give the impression of a three-dimensional object to a viewer. Depending on the exemplary embodiment, the entities 120 may be displayed on a 2D display unit or on a 3D display unit.

To control the display device to execute one of the plurality of applications, a user may select an application icon associated with a desired application that is to be executed. In other words, the user may select the application icon and execute an application corresponding to the selected application icon. For example, to execute a text messaging application, the user may select the messaging icon 110 displayed in a first one of the entities 120. In response to an input selecting the messaging application icon 110 being received whilst the application selection screen 100 is displayed, the display device may execute an application (in this case, the text messaging application) associated with the selected application icon.

Specifically, the application selection screen 100 illustrated in FIG. 1 may appear similar to an application selection screen in which application icons are displayed separately for different applications. However, the application selection screen 100 of the present exemplary embodiment differs in that the application icons 110 are contained in the entities 120 which may be configured to more effectively utilize an available display space.

Specifically, in some exemplary embodiments, a plurality of application icons 110 may be accessed through a single entity 120 in the application selection screen 100, and increase the number of applications that may be accessed through a particular user interface screen.

FIGS. 2A to 2C illustrate operations of creating a merged entity, according to an exemplary embodiment. The creation of the merged entity will be described below in the context of a user input received through a touch-screen display unit. However, as explained above, the exemplary embodiments are not limited to use with touch-screen interfaces and in other exemplary embodiments the user input may be received differently.

As shown in FIG. 2A, to create the merged entity, a user selects a first entity 220 including a first application icon 210 and drags the first entity 220 towards a second entity 120 including a second application icon 110. In the exemplary embodiment, a user input 230 selecting and dragging the first entity 220 is received as a touch-and-drag event through the touch-screen display unit. Although in the exemplary embodiment, the first and second entities 220 and 120 each include a single application icon before creating the merged entity, in other exemplary embodiments, at least one of the entities 220 and 120 may already include a plurality of application icons before merging. As the user drags the first entity 220 around the application selection screen 100, a display device repeatedly checks a distance X between the first entity 220 and the second entity 120.

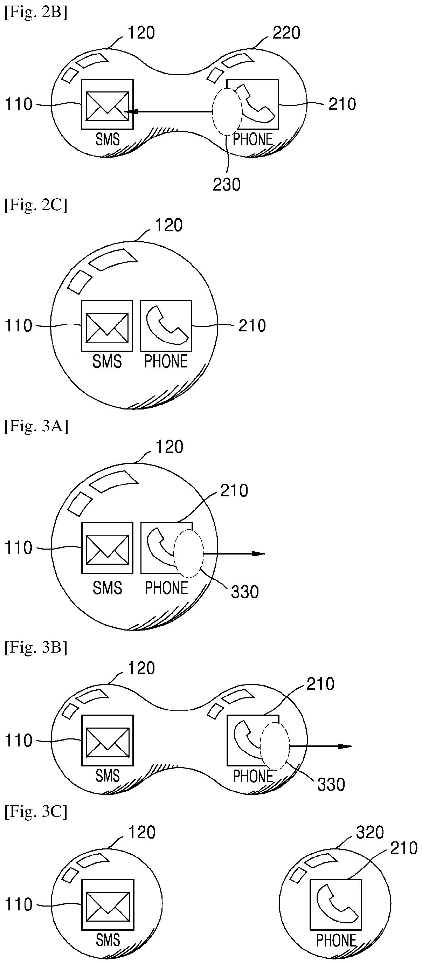

In response to the first user input 230 dragging the first entity 220 to within a first threshold distance C1 from the second entity 120 while continuing to select the first entity 220, visual feedback is displayed to indicate merging of the first and second entities 220 and 120 into the merged entity. In the exemplary embodiment the visual feedback takes the form of an animation showing the bubble of the first entity 220 beginning to join with the bubble of the second entity 120, as shown in FIG. 2B. The visual feedback informs the user that the entities 220 and 120 will be merged if the user releases the first entity 220 at a current position. Similarly, if the first entity 220 is subsequently dragged further than a second threshold distance C2 away from the second entity 120, further visual feedback may be displayed to indicate splitting of the merged entity back into the first and second entities 220 and 120.

Although the visual feedback is displayed as an animation in the exemplary embodiment, in other exemplary embodiments different forms of visual feedback may be used. Examples of other types of visual feedback that may be used include a displayed message to indicate that the entities will be merged in their current positions, a change in color of one or both of the entities, a shade effect such as a lighting effect applied to one or both of the entities, and a change in size of one or both of the entities.

Furthermore, in other exemplary embodiments a different type of feedback, such as audio or haptic feedback, may be provided instead of or in addition to visual feedback. In response to the user releasing the first entity 220 within the second threshold distance C2 of the second entity 120, the first application icon 210 is added to the second entity 120, and the first entity 220 is removed from the application selection screen 10. The second entity 120 may now be referred to as a 'merged' entity since the second entity 120 includes the application icons 210 and 110 which were previously contained in the separate entities 220 and 120.

The second threshold distance C2 may be the same as the first threshold distance C1, or may have a different value. For example, the second threshold distance C2 may be greater than the first threshold distance C1. This has the effect that entities will begin to merge at a certain separation and must then be dragged further apart in order to cancel the operation, lending a 'sticky' character to the entities. This hysteresis-like effect may be particularly advantageous when a small display screen is used, since it is less critical for a user to accurately release the dragged entity in very close proximity to the target (merged) entity. Instead, the user only has to drag the first entity 220 to within a certain distance (C1) of the second entity 120 to trigger merging, and may then release the first entity 220 anywhere within a larger radius (C2) of the second entity 120 to confirm the operation. In the exemplary embodiment, releasing the first entity 220 within the second threshold distance C2 represents a request to merge the first and second entities 220 and 120. In other exemplary embodiments, the request to merge the two entities 220 and 120 may be received in a different manner. For example, in a multitouch user interface, the user may simultaneously tap-and-hold (long pressing) both entities to be merged, and the tap-and-hold may be interpreted as a request to merge the entities in response to both entities being held for longer than a predetermined time. Alternatively, an input whereby the user throws (tap-and-drag) the first entity 220 in a direction in which the second entity 120 is located may be interpreted as a request to merge the two entities. The input may be applied when a user dragging speed exceeds a threshold speed.

Also, in the exemplary embodiment the first selected entity 220 is removed when the two entities 220 and 120 are merged. However, in other exemplary embodiments the second entity 120 may be removed instead, with the second application icon 110 being added to the first entity 220. Whether the first entity 220 or the second entity 120 persists after merging the entities 220 and 120 will depend on how software instructions are configured to manage the entities 220 and 120 in memory. As a further alternative, in some exemplary embodiments the first entity 220 and the second entity 120 may both be removed, and a new entity may be created to hold the application icons 210 and 110 from both entities 220 and 120.

As shown in FIG. 2C, in the exemplary embodiment a size of the entity 120 is increased when the other application icon 210 is added to the entity 120. When merging entities in this way, the display device may determine a new display size of the merged entity 120 and display the merged entity 120 according to the new display size. In some exemplary embodiments, the new display size may be determined based on a predefined rule which imposes an upper limit on the size for the merged entity 120. This approach may avoid a single entity expanding to fill the entire display area when many application icons are added to the same entity. In the exemplary embodiment, the new display size may be calculated based on a geometric series of the form:

$$A_{merged} = A_0 + \left(a - \frac{b}{c^n}\right)$$

where $A_{merged}$ denotes the display size of the merged entity, $A_0$ denotes a predefined size, n denotes the number of application icons to be displayed in the merged entity, and a, b and c denote constants. In this regard, 'size' may refer to a linear dimension, an area, or a volume. For example, the display size and the predefined size may be defined as a linear dimension such as the radius, diameter or circumference of a 2D object or a representation of a 3D object. Alternatively, the size may be defined in terms of a display area, for instance a number of pixels, or as a three-dimensional volume when the entities are displayed as representations of 3D objects.

The display device may merge the entities as shown in FIGS. 2A to 2C, and, in some exemplary embodiments the display device may also split an entity which contains a plurality of application icons into separate entities, each holding one or more application icons.

FIGS. 3A to 3C illustrate operations of splitting an entity which contains a plurality of icons, according to an exemplary embodiment. In the example shown in FIGS. 3A to 3C the entity 120 being split is similar to the merged entity created in FIG. 2C, however, it will be appreciated that the method may be applied to any entity which includes two or more application icons.

First, as shown in FIG. 3A a user input 330 is received which selects and holds the first application icon 210 within the entity 120. In other words, a display device receives the user input 330 that maintains a status of the first application icon 210 that it has when it is touched. Then, in response to the user input 330 dragging the selected application icon 210 further than a third threshold distance C3 away from the entity 120, the display device may split the entity 120. In other words, the display device may split the entity 120 into entities 120 and 320. The third threshold distance C3 may be the same as or may be different from the first threshold distance C1 used to initiate merging of entities.

Visual feedback may be displayed to indicate creation of the new entity 320 containing the first application icon 210, as shown in FIG. 3B. In an exemplary embodiment, the visual feedback may include an animation that is the reverse of the one displayed in FIG. 2B. However, in other exemplary embodiments the visual feedback may take different forms. As discussed above with respect to FIG. 2B, corresponding visual feedback may subsequently be displayed to indicate merging of the original entity 120 and the new entity 320, in response to the selected application icon 210 being dragged back to within a fourth threshold distance C4 from the entity 120. The fourth threshold distance C4 may be the same as or may be different from the second threshold distance c2 used in a merging operation. Furthermore, as with the merging operation, in other exemplary embodiments a different type of feedback may be provided during a splitting operation, such as audio or haptic feedback, instead of or in addition to visual feedback.

As shown in FIG. 3C, the display device may receive a request to split the entity 120. For example, in response to the user releasing the first application icon 210 further than the fourth threshold distance C4 away from the original entity 120, the display device creates the new entity 320 to contain the first application icon 210. The original entity 120 persists, and retains the remaining icons 110 other than the one which was removed. Similar to the merging operation, the fourth threshold distance C4 used to confirm splitting may be the same as the third threshold distance C3 used to initiate splitting or may have a different value. For example, the threshold distance C4 may be greater than the third threshold distance C3.

As in the above-described example of entities being merged, when the entity 120 is split into the entities 120 an 320 as shown in FIG. 3C, the display device may calculate a display size of the entity 120 based on the number of icons that remain in the entity 120. The display device updates a size of the entity 120 to the calculated display size. As the new entity 320 only holds the single icon 210, a default size may be used for the new entity 320.

Using the methods described with reference to FIGS. 2A to 3C, a user may configure the application selection screen 100 of FIG. 1 by creating one or more entities which include a plurality of icons. An entity which includes a plurality of application icons may be referred to as a group entity. Applications may then be executed directly from the application selection screen 100 by selecting the corresponding application icon within the group entity. In this way, a group entity may be distinct from a folder-based user interface, in which a user must first open a folder in order to view and select contents included in the folder.

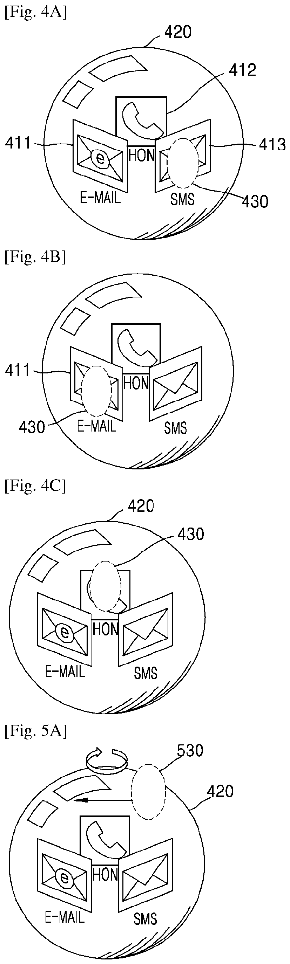

FIGS. 4A to 4C illustrate executing various applications from a group entity, according to an exemplary embodiment. In the exemplary embodiment a group entity 420 includes three application icons 411, 412, 413, which are associated respectively with an email application, a phone application, and a text messaging application. The application icons 411, 412, 413 are distributed at different depths within the three-dimensional entity 120 in order to allow the application icons 411, 412, 413 to be partially overlapped, making more efficient use of the available display area. The use of three-dimensional entities as illustrated in FIGS. 4A to 4C may be particularly advantageous when an UI is implemented in a device with a small display screen, for example a wearable device such as a smartwatch. In the exemplary embodiment the application icons 411, 412, 413 are mapped onto the surface of a sphere. In some exemplary embodiments, additional application icons may also be displayed on predefined layers within the sphere.

As shown in FIG. 4A, when a touch event 430 is received on the text messaging icon 413 whilst an application selection screen is being displayed, a display device responds by executing the text messaging application. When a touch event is described as being received "on" a particular application icon, in exemplary embodiments this can mean that a touch event is detected, received, or recorded at a location on a touch-sensitive screen, the location corresponding to a location of the application icon. Similarly, as shown in FIGS. 4B and 4C, when a touch event 430 is received on the email icon 411 or the phone icon 412 whilst the application selection screen is being displayed, the display device responds by executing the email application or the phone application as appropriate.

In the exemplary embodiment, the group entity 420 may be rotated, that is, the application icons within the group entity 420 may change position relative to one another as if they are being rotated about a central axis, in order to more easily access icons which are currently displayed behind the other icons 411 and 413 within the entity 420, such as the phone icon 412 in FIG. 4A.

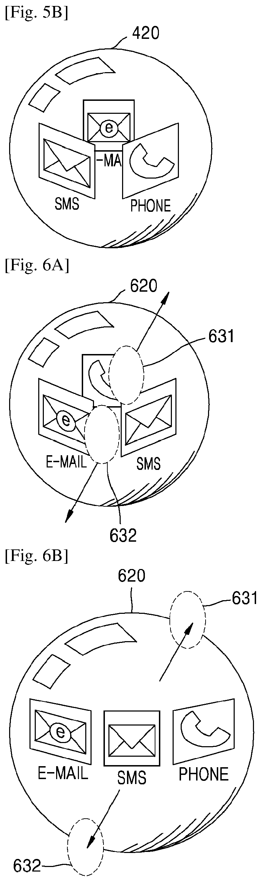

FIGS. 5A and 5B illustrate rotating the group entity 420, according to an exemplary embodiment. Alternatively, a display device may rotate application icons included in the group entity 420. The display device may rotate the application icons to change depths of the application icons. In the exemplary embodiment, in response to a request to rotate the three-dimensional entity 420, which is received as a touch-and-drag event 530 within the boundary of the entity 420, the display device determines a new arrangement of application icons within one of a plurality of entities, based on a rotation of a three-dimensional object in accordance with a user input. Then, as shown in FIG. 5B, the display device displays the entity 420 again using the new arrangement of application icons. A user may rotate any group entity as shown in FIGS. 5A and 5B whenever the application selection screen is being displayed.

Various parameters relating to the rotation of an entity may be configured, including:
Enable / Disable ability to spin.
Speed of swiping gesture to be recognized as a user input to spin the entity.
Area from which the swiping gesture should be started in order to spin the entity.
Policy for swiping gesture to distinguish between swiping gesture on entity and swiping gesture on parent view of the entity.
Policy of movement of positions of items while spinning.
Furthermore, in an exemplary embodiment the ability to select and execute applications from icons at the rear of the entity, such as the phone icon 412 in FIG. 4A, may be disabled. Instead, the user may rotate the entity as shown in FIGS. 5A and 5B, to bring the desired icon to the front in order to select the icon and execute the associated application. In other words, the user may rotate the entity 420 to execute the phone application as shown in FIGS. 5A and 5B.

Instead of, or in addition to, rotating a group icon as shown in FIGS. 5A and 5B, in certain exemplary embodiments the display device may be configured to enable a user to zoom in or out of a group icon in order to more easily access partially hidden icons.

FIGS. 6A and 6B illustrate rearranging icons within a group entity 620 when zooming, according to an exemplary embodiment. FIGS. 6A and 6B illustrate how application icons may be rearranged within the group entity 620 when a user zooms in/ out on the entity 620, that is, when changing a display size of the entity 620. In the exemplary embodiment, a request to resize the entity 620 is received in a pinch-to-zoom manner through a touch-screen display, by touching two contact points 631 and 632 and dragging apart to enlarge the entity 620. Similarly, the display size of the entity 620 may be reduced by performing the reverse operation, that is, by touching two widely separated points over the entity 620 and dragging toward each other.

As shown in FIG. 6B, a new display size is determined in accordance with the user input. In the exemplary embodiment, as the touch points 631 and 632 are moved beyond a boundary of the entity 620, a diameter of the entity 620 is increased in accordance with current positions of the touch points 631 and 632. Once the entity 620 has been expanded beyond a threshold size, which may depend on the number of application icons included in the entity 620, the application icons inside are rearranged automatically. In some exemplary embodiments the application icons may also be enlarged, to allow a user to more easily select a desired application. As shown in FIG. 6B, the application icons are displayed in an independent space so that the application icons are not located behind a different application icon. In FIG. 6B, the user may select one of an email icon, a text messaging icon, and a phone icon without the rotation of the entity 620. The user may enlarge or shrink any group entity using this method, whenever the application selection screen is being displayed.

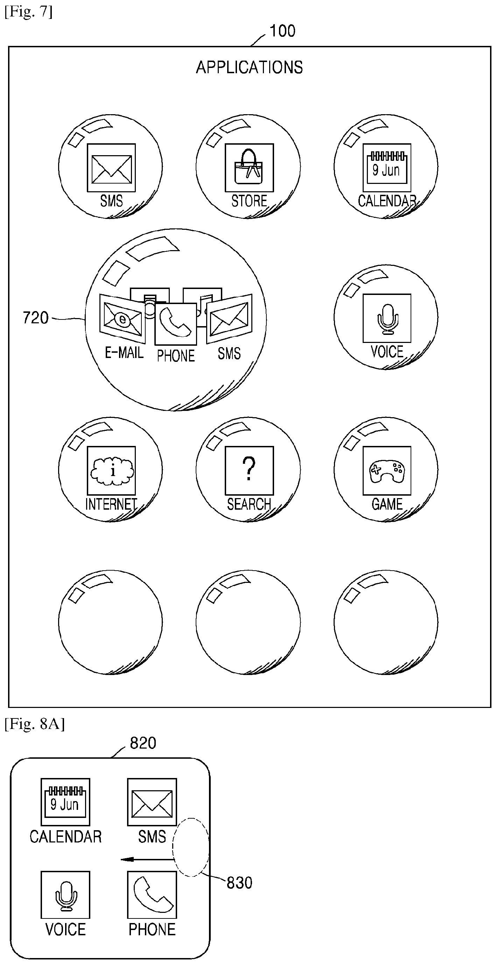

FIG. 7 illustrates the application selection screen 100 including a plurality of entities and a group entity 720, according to an exemplary embodiment. Referring to FIG. 7, five application icons from the application selection screen 100 of FIG. 1 have been merged into the single group entity 720, which occupies approximately the same area as two other entities in the original application selection screen 100. As shown in FIG. 7, this has created space at the bottom of the application selection screen 100 for two new entities to be added, which are waiting to be populated with application icons. In the exemplary embodiment, to add an application icon to an empty entity, a user may press (tap and hold) an empty entity for a certain time, at which point a display device displays a list of currently unused applications. The unused applications are applications which are not currently included in the application selection screen 100. The user may then select one or more applications from the list. Associated application icons will be added to the empty entity. In other exemplary embodiments, different methods may be used to add new application icons to the application selection screen 100. For example, the user may drag an existing application icon from another page of an application menu (second application selection screen) onto a current page (first application selection screen).

Exemplary embodiments have been described in relation to 3D entities, that is, entities which are displayed as representations of 3D objects. However, in other exemplary embodiments the entities may be displayed as 2D objects.

FIGS. 8A to 8C illustrate scrolling through applications within a 2-dimensional group entity 820, according to an exemplary embodiment.

In the exemplary embodiment, application icons may not be displayed at different depths within the group entity 820 since a 2D object is used to indicate the group entity 820. In the exemplary embodiment, to avoid a size of the group entity 820 increasing undesirably when many icons are added to the group entity 820, a display device is configured to display up to a maximum number of application icons arranged on a two-dimensional grid within the group entity 820. When the group entity 820 includes more application icons than a maximum number, which in the exemplary embodiment is four, excess application icons are not displayed in the group entity 820.

To access hidden icons, a user may tap and swipe across the group entity 820 in a horizontal and/or vertical direction, as shown in FIG. 8A. In response to a user input 830 including a request to scroll through the application icons within the group entity 820, the display device scrolls through the plurality of application icons as shown in FIGS. 8A to 8C in a direction indicated by the user input 830, to display the previously-hidden application icons.

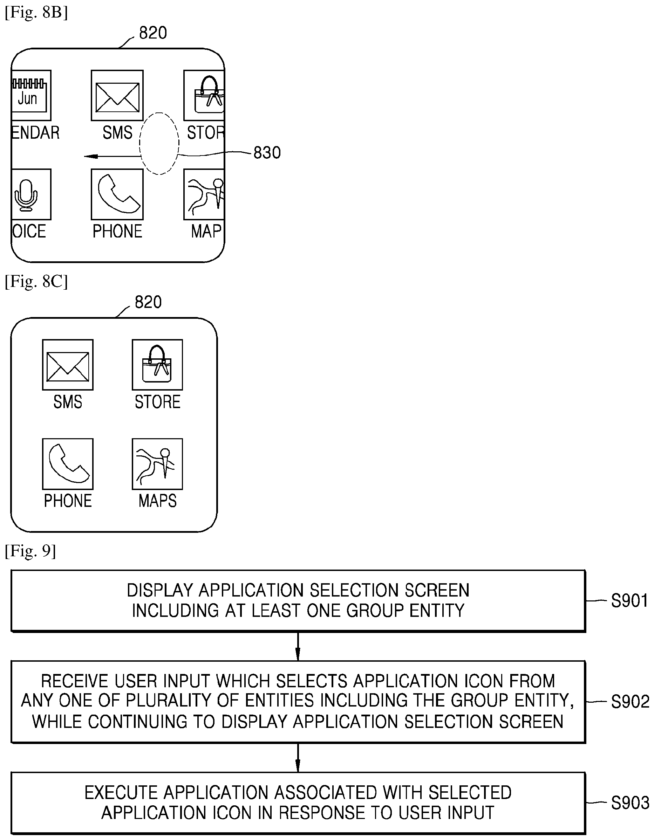

In FIGS. 8A to 8C, the group entity 820 includes six application icons (a calendar icon, a message icon, a voice icon, a phone icon, a store icon, and a map icon). When a maximum number of icons that may be displayed by the single group entity 820 is set as 4, as shown in FIG. 8A, the display device includes only four application icons (the calendar icon, the message icon, the voice icon, and the phone icon) within the group entity 820. In FIG. 8B, if the user input 830 is received, and the user drags the group entity 820 to the left while touching inside the group entity 820, the display device partially displays the application icons (the store icon and the map icon) that were not displayed earlier, and partially displays the application icons (the calendar icon and the voice icon) that were previously displayed on the left. In FIG. 8C, if the user input 830 ends, the display device removes the application icons (the calendar icon and the voice icon) that were previously displayed in the group entity 820 on the left, and displays the other application icons (the message icon, the phone icon, the store icon, and the map icon). Methods of controlling the display device will now be described within reference to FIGS. 9 to 14. Any of these methods may be implemented using software instructions stored in computer-readable memory, which when executed by one or more processors within the display device, cause the device to perform the method.

FIG. 9 is a flowchart showing a method of controlling a display device, according to an exemplary embodiment.

In operation S901, an application selection screen such as the one shown in FIG. 7 is displayed on a display unit, the application selection screen including at least one group entity. In other words, the display device displays at least one entity including an application icon on the application selection screen.

In operation S902, a user input is received which selects an application icon from any one of a plurality of entities, the plurality of entities including the group entity, while continuing to display the application selection screen.

In operation S903, the display device is controlled to execute an application associated with the selected application icon, in response to the user input.

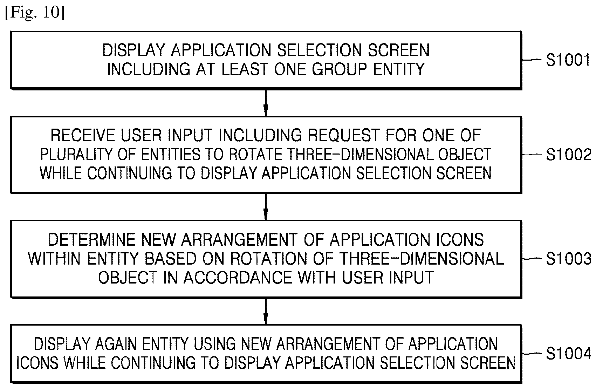

FIG. 10 is a flowchart showing a method of rotating icons within a three-dimensional entity, according to an exemplary embodiment. A display device may rotate a group entity as shown in Figs. 5A and 5B. A user may more easily select icons towards the rear of a 3D entity.

In operation S1001, an application selection screen such as the one shown in FIG. 7 is displayed.

In operation S1002, the display device receives a user input including a request for one of a plurality of entities to rotate the three-dimensional object while continuing to display the application selection screen.

In operation S 1003, the display device determines a new arrangement of application icons within the entity, based on a rotation of the three-dimensional object in accordance with the user input.

In operation S1004, the display device displays again the entity using the new arrangement of application icons, while continuing to display the application selection screen.

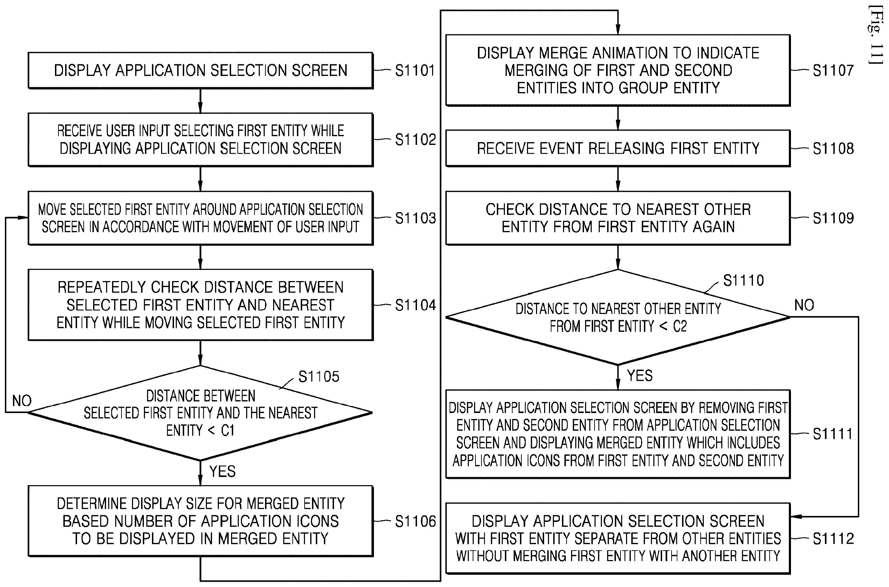

FIG. 11 is a flowchart showing a method of merging entities in an application selection screen, according to an exemplary embodiment. The method may be used to merge entities as shown in FIGS. 2A to 2C, enabling more application icons to be added to an application selection screen.

In operation S1101, a display device displays the application selection screen such as the one shown in FIG. 7.

In operation S1102, the display device receives a user input selecting a first entity while displaying the application selection screen. In the exemplary embodiment, the user input is received as a touch and drag event through a touch-screen display unit, but in other exemplary embodiments a different type of interface may be used.

In operation S 1103, the selected first entity is moved around the application selection screen in accordance with the movement of the user input.

In operation S1104, the display device repeatedly checks a distance between the selected first entity and the nearest entity while moving the selected first entity.

In operation S1105, the display device checks whether the distance between the selected first entity and the nearest entity is smaller than the first threshold distance C1.

In response to the selected first entity being dragged to within the first threshold distance C1 from a second entity while a user continues to select the first entity, in operation S1106, the display device determines a display size for a merged entity based the number of application icons to be displayed in the merged entity.

In operation S1107, a merge animation is displayed to indicate merging of the first and second entities into a group entity, as shown in FIG. 2B.

In operation S1107, the display device may subsequently display further visual feedback to indicate splitting of the merged entity back into separate entities, in response to the user input dragging the first entity further than the second threshold distance C2 away from the second entity.

In operation S1108, the display device receives an event releasing the first entity. In operation S1109, the display device checks the distance to the nearest other entity from the first entity again in response to the released first entity. In response to the first entity being released within the second threshold distance C2 of another entity, the display device determines that the user input includes a request to merge the first and second entities.

In operation S1110, the display device determines whether the distance to the nearest other entity from the first entity is smaller than the second threshold distance C2.

In operation S1111, the display device continues to display the application selection screen by removing the first entity and the second entity from the application selection screen and displaying a merged entity which includes the application icons from the first entity and the second entity, as shown in FIG. 2C.

In operation S 1112, in response to the first entity being released further than the second threshold distance C2 from any other entity, the display device continues to display the application selection screen with the first entity separate from other entities, that is, without merging the first entity with another entity.

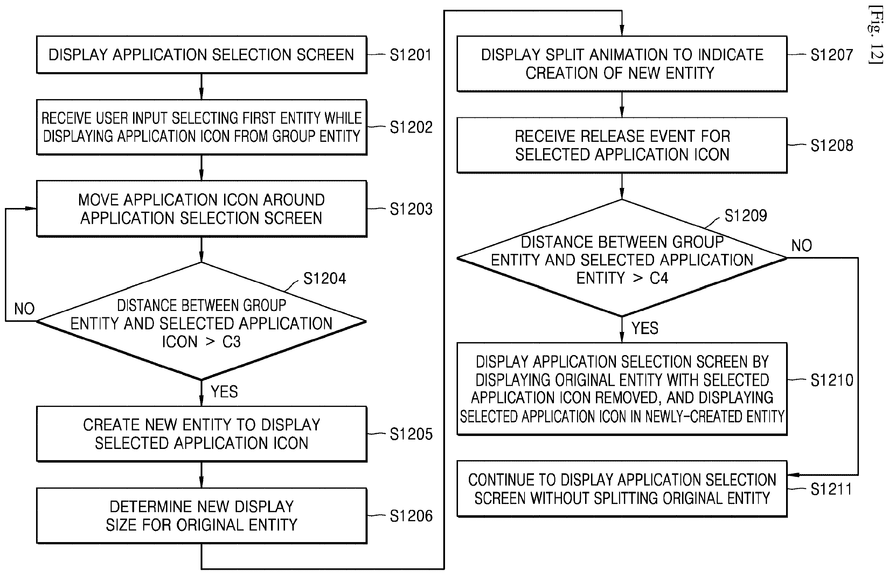

FIG. 12 is a flowchart showing a method of splitting an entity in an application selection screen, according to an exemplary embodiment. The method may be used to split a group entity as shown in FIGS. 3A to 3C.

In operation S1201, an application selection screen such as the one shown in FIG. 7 is displayed.

In operation S1202, a display device receives a user input selecting an application icon from a group entity. The user input is received as a touch event through a touch-screen display unit, but in other exemplary embodiments a different type of interface may be used.

In operation S1203, the display device moves the application icon around the application selection screen in response to the user input dragging the icon while continuing to select the application icon, and as in the method of FIG. 11, repeatedly checks the distance from the original entity while moving the selected application icon.

In operation S1204, the display device determines whether a distance between a group entity and the selected application icon is greater than the third threshold distance C3.

If the icon is dragged further than the third threshold distance C3 from the entity, in operation S1205, the display device creates a new entity to display the selected application icon.

In operation S1206, the display device determines a new display size for the original entity based on how many of the application icons will remain in the original entity once the selected application icon has been removed. Although in the exemplary embodiment the new display size for the original entity is calculated after creating the new entity, in other exemplary embodiments operations S1205 and S1206 may be performed in the reverse order.

In operation S1207, the display device displays visual feedback in the form of a split animation to indicate creation of the new entity containing the selected icon, as shown in FIG. 3B. During operation S1207, the display device subsequently displays further visual feedback to indicate merging of the original entity and the new entity, in response to the user input dragging the selected application icon closer than the fourth threshold distance C4 while the user continues to hold the application icon. In the exemplary embodiment the third threshold distance C3 used to initiate splitting is the same as the first threshold distance C1 used to initiate merging, but in other exemplary embodiments third threshold distance C3 and the first threshold distance C1 may be different.

In operation S1208, the display device receives a release event, indicating that the user has released the application icon. If the application icon is released further than the fourth threshold distance C4 from the original entity, the display device determines that the release event constitutes a request to remove the selected application icon from the group entity.

In operation S1209, the display device determines whether the distance between the group entity and the selected application entity is greater than the fourth threshold distance C4.

In operation S1210, the display device may continue to display the application selection screen by displaying the original entity with the selected application icon removed, and displaying the selected application icon in the newly-created entity.

On the other hand, in response to the selected application icon being released within the fourth threshold distance C4 from the original entity in operation S 1208, in operation S1211, the display device continues to display the application selection screen without splitting the original entity, that is, with the selected application icon retained in the original entity. Again, the fourth threshold distance C4 used to confirm splitting may be the same as or different from the second threshold distance C2 used to confirm merging in FIG. 11.

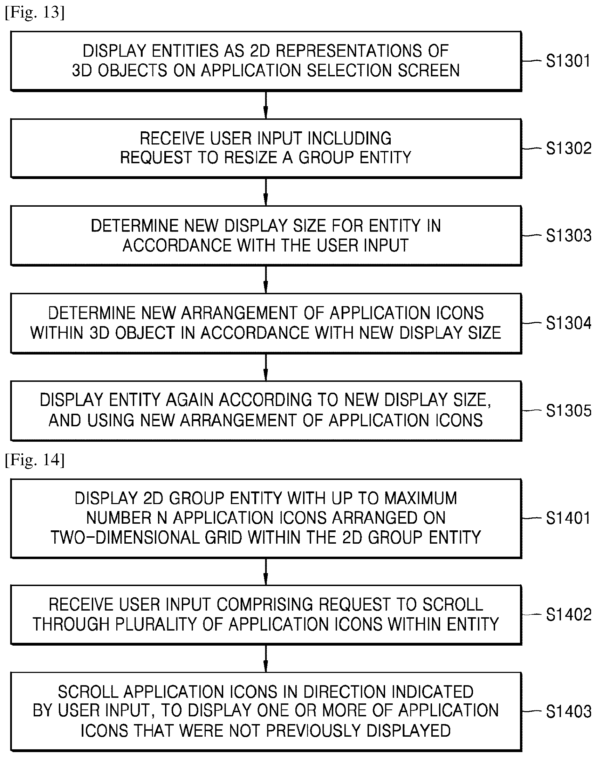

FIG. 13 is a flowchart showing a method of resizing an entity in an application selection screen, according to an exemplary embodiment. The method may be used to resize the entity and rearrange application icons as shown in FIGS. 6A and 6B.

In operation S1301, the application selection screen such as the one shown in FIG. 7 is displayed. A display device displays entities as 2D representations of 3D objects on the application selection screen.

In operation S1302, a user input including a request to resize a group entity is received, for example, in the form of a pinch-to-zoom gesture as described above. Next, in operation S1303, the display device determines a new display size for the entity in accordance with the user input.

In operation S 1304, the display device determines a new arrangement of the application icons within the 3D object in accordance with the new display size.

As described above, in some exemplary embodiments the display device may be configured to only rearrange the application icons if the display size of the entity has increased or decreased by more than a threshold value.

In operation S1305, the display device displays the entity again according to the new display size, and using the new arrangement of application icons, while continuing to display the application selection screen.

FIG. 14 is a flowchart showing a method of scrolling through application icons within a two-dimensional entity in an application selection screen, according to an exemplary embodiment. The method may be used with a 2D group entity such as the one illustrated in FIGS. 8A to 8C.

In operation S1401, a display device displays a 2D group entity with up to a maximum number N application icons arranged on a two-dimensional grid within the 2D group entity, such that when one of entities includes the application icons more than the maximum number, any application icons exceeding the limit N are not displayed.

In operation S1402, the display device receives a user input including a request to scroll through the plurality of application icons within the entity.

In response to the user input, in operation S1403, the display device scrolls the application icons in a direction indicated by the user input, to display one or more of the application icons that were not previously displayed.

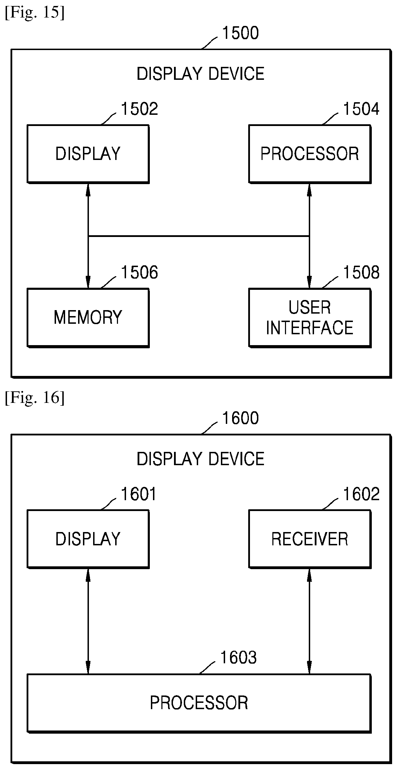

FIG. 15 illustrates a display device capable of executing a plurality of applications, according to an exemplary embodiment. A display device 1500 includes a display 1502, a processor 1504 including one or more processors, a memory 1506 including a computer-readable storage medium, and a user interface 1508. For example, the user interface 1508 may be a touch-screen module integrated with the display 1502. The memory 1506 may store computer program instructions, which when executed by the processor 1504, cause the display device 1500 to perform any of the above-described methods. Although the display 1502 and the user interface 1508 are shown as being included in the display device 1500 in FIG. 15, in other exemplary embodiments the display 1502 and/or the user interface 1508 may be physically separate. For example, the processor 1504 may be configured to communicate with the display 1502 and/or the user interface 1508 over a wireless interface.

FIG. 16 illustrates a display device 1600, according to an exemplary embodiment. The display device 1600 includes a display 1601, a receiver 1602, and a processor 1603.

The display 1601 may display application icons in accordance with the control of the processor 1603 or may display an application execution screen. The display 1601 may display one or more entities including the application icons on an application selection screen. The display 1601 may display a screen of merging or splitting the application icons in accordance with the control of the processor 1603.

The receiver 1602 may receive an input from a user. The receiver 1602 may receive a touch input, a keyboard input, a mouse input, etc. from the user. The receiving unit 1602 may receive the input from the user and transmit the input received from the user to the processor 1630.

The processor 1603 may control the display 1601. The processor 1603 may determine which screen to display on the display 1601 and control the display 1601 to display the determined screen.

The processor 1603 may receive the input of the user from the receiver 1602. The processor 1603 may determine an image that is to be displayed on the determined screen in accordance with the input of the user.

The processor 1603 may merge or split the application icons and may execute an application selected by the user.

If the processor 1603 receives a touch input on a first entity among the entities and an input of dragging the first entity to a second entity, the processor 1603 may merge the first entity and the second entity, create a merged entity, and display the application icon included in the first entity and the application icon included in the second entity inside the merged entity.

The processor 1603 may determine a display size of the merged entity based on the number of the application icons included in the merged entity and display the merged entity in accordance with the determined display size.

The processor 1603 may add an upper limit to the display size and limit a maximum size of the merged entity.

The processor 1603 may determine a maximum number of the application icons that are to be displayed inside the merged entity and only application icons less than or equal to the maximum number inside the merged entity may be displayed.

The processor 1603 may display the entities as 3D objects and display two or more of the application icons included in the entities to indicate different depths.

The processor 1603 may determine a new arrangement of the two or more application icons in accordance with a user input for the rotation of the entities and may display the two or more application icons again using the new arrangement, while continuing to display the application selection screen.

The processor 1603 may display the entities as 2D objects, may determine a new arrangement of the application icons included in the entities in accordance with a user input of scrolling through the entities, and may display the application icons included in the entities using the new arrangement, while continuing to display the application selection screen.

The processor 1603 may touch a first application icon in a third entity including first and second application icons, may receive an input of dragging the first application icon outside the third entity, may create a new fourth entity, and display the third entity including the second application icon and the fourth entity including the first application icon.

The processor 1603 may determine a new display size of the entities based on a user input for resizing the entities and may display the entities in accordance with the determined display size.

The exemplary embodiments have been described in which application icons are contained within entities that may be dynamically manipulated to arrange the icons in a more efficient manner, for example by creating group entities which include one or more application icons while occupying a relatively small display area.

Some exemplary embodiments are implemented in a multi-touch device, with the result that multiple users may simultaneously execute different applications and manipulate displayed entities, for example by merging, splitting, rotating and/or zooming different ones of the displayed entities. As an example, one user may drag an entity towards a group entity in order to merge two entities, whilst another user simultaneously drags an application icon out of the same group entity in order to create a new entity.

The device according to the exemplary embodiments may include a processor, a memory for storing program data and executing it, a permanent storage unit such as a disk drive, a communications port for handling communications with external devices, and user interface devices, including a touch panel, keys, buttons, etc. When software modules or algorithms are involved, these software modules may be stored as program instructions or computer readable codes executable on a processor on a computer-readable medium. Examples of the computer readable recording medium include magnetic storage media (e.g., ROM, floppy disks, hard disks, etc.), and optical recording media (e.g., CD-ROMs, or DVDs). The computer readable recording medium can also be distributed over network coupled computer systems so that the computer readable code is stored and executed in a distributed fashion. This media can be read by the computer, stored in the memory, and executed by the processor.

Exemplary embodiments may be described in terms of functional block components and various processing steps. Such functional blocks may be realized by any number of hardware and/or software components configured to perform the specified functions. For example, the exemplary embodiments may employ various integrated circuit components, e.g., memory elements, processing elements, logic elements, look-up tables, and the like, which may carry out a variety of functions under the control of one or more microprocessors or other control devices. Similarly, where the elements of the exemplary embodiments are implemented using software programming or software elements, the exemplary embodiments may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the exemplary embodiments could employ any number of conventional techniques for electronics configuration, signal processing and/or data processing and the like. The words "mechanism" and "element" are used broadly and are not limited to mechanical or physical embodiments, but can include software routines in conjunction with processors, etc.

The particular implementations shown and described herein are illustrative examples and are not intended to otherwise limit the scope of the inventive concept in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device.

The use of the terms "a" and "an" and "the" and similar referents in the context of describing the exemplary embodiments (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The use of any and all examples, or exemplary language (e.g., "such as") provided herein, is intended merely to better illuminate the exemplary embodiments, and does not pose a limitation on the scope of the inventive concept unless otherwise claimed. Numerous modifications and adaptations will be readily apparent to those of ordinary skill in this art without departing from the spirit and scope of the exemplary embodiments.

components, e.g., memory elements, processing elements, logic elements, look-up tables, and the like, which may carry out a variety of functions under the control of one or more microprocessors or other control devices. Similarly, where the elements of the exemplary embodiments are implemented using software programming or software elements, the exemplary embodiments may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the exemplary embodiments could employ any number of conventional techniques for electronics configuration, signal processing and/or data processing and the like. The words "mechanism" and "element" are used broadly and are not limited to mechanical or physical embodiments, but can include software routines in conjunction with processors, etc.

The particular implementations shown and described herein are illustrative examples and are not intended to otherwise limit the scope of the inventive concept in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device.

The use of the terms "a" and "an" and "the" and similar referents in the context of describing the exemplary embodiments (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The use of any and all examples, or exemplary language (e.g., "such as") provided herein, is intended merely to better illuminate the exemplary embodiments, and does not pose a limitation on the scope of the inventive concept unless otherwise claimed. Numerous modifications and adaptations will be readily apparent to those of ordinary skill in this art without departing from the scope of the exemplary embodiments.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope as defined by the fol-

**Claims**

1. A method of operating a display device (1500, 1600), the method comprising:

   displaying a plurality of entities (120, 220) on an application selection screen (100), each entity (120, 220) enclosing at least one application icon (110, 210) in the inside, each application icon corresponding to a respective application;
   receiving a first input selecting one of the application icons (110, 210) within an entity enclosing at least one application icon, while continuing to display the application selection screen (100);
   executing the application corresponding to the selected application icon, in response to the first input;
   receiving a second touch input (230) selecting a first entity (220) of the plurality of entities (120, 220) and dragging the first entity (220) to a second entity (120) of the plurality of entities, wherein a first application icon (210) is displayed inside the first entity (220), and a second application icon (110) is displayed inside the second entity (120);
   determining a distance between the selected first entity and the second entity while selecting and dragging the first entity;
   displaying a first visual feedback informing that the selected first entity and the second entity will be merged if the selected first entity is released while the distance is less than a first threshold distance;
   merging the first entity (220) with the second entity (120) to create a merged entity (120) and displaying the first application icon (210) and the second application icon (110) inside the merged entity (120) if the selected first entity is the released while the distance is less than the first threshold distance while continuing to display the remaining entities and all their enclosed application icons; and
   displaying a second visual feedback informing that the merging is cancelled if the selected first entity is dragged further apart from the second entity than a second threshold distance while the first visual feedback is displayed.

2. The method of claim 1, further comprising:

   determining a display size of the merged entity (120) based on the number of the application icons (110, 210) displayed inside in the merged entity; and
   displaying the merged entity in accordance with the determined display size.

3. The method of claim 2, wherein the determining of the display size comprises limiting the display size of the merged entity to a maximum display size, wherein the maximum display size is based on an upper limit.

4. The method of claim 1, further comprising:

   determining a maximum number of application icons to be displayed inside the merged entity; and
   displaying a number of application icons inside the merged entity, wherein the number of application icons is less than the maximum number.

5. The method of claim 1, wherein the displaying comprises:

   displaying the entities as three-dimensional objects (420), and
   displaying two or more of the application icons (411, 412, 413) inside the entities (420) in a manner that indicates that the two or more application icons (411, 412, 413) have different depths.

6. The method of claim 5, further comprising:

   determining a new arrangement of the two or more application icons (411, 412, 413) in accordance with a user input for rotation of the entities (420); and
   displaying the two or more application icons (411, 412, 413) using the new arrangement, while continuing to display the application selection screen (100).

7. The method of claim 1, wherein the displaying comprises:

   displaying the entities (120, 220) as two-dimensional objects;
   determining a new arrangement of the application icons included in the entities in accordance with a user input of scrolling through the entities; and
   displaying the application icons included in the one or more entities using the new arrangement, while continuing to display the application selection screen (100).

8. The method of claim 1, further comprising:

   receiving an input (330) selecting a first application icon (210) displayed inside a first one (220) of the entities, wherein a second application icon (110) is displayed inside the first entity (220);

receiving an input (330) dragging the first application icon (210) outside the first entity (220);
creating a second entity (320); and
displaying the second application icon (110) inside the first entity (220) and the first application icon (210) inside the second entity (320).

9. The method of claim 1, further comprising:

determining a new display size of the entities (120, 220, 320, 420) based on a user input for resizing the entities; and
displaying the entities in accordance with the determined new display size.

10. A display device (1500, 1600) comprising:

a display unit (1502, 1601);
at least one processor (1504); and
a memory (1506) configured to store computer program instructions executable by the at least one processor (1504), including computer program instructions for:

displaying a plurality of entities (120, 220) on an application selection screen (100), each entity enclosing at least one application icon (110, 210) in the inside, each application icon corresponding to a respective application;
receiving a first input selecting one of the application icons (110, 210) within an entity enclosing at least one application icon while continuing to display the application selection screen (100);
executing the application corresponding to the selected application icon, in response to the first input;
receiving a second touch input (230) selecting a first entity (220) of the plurality of entities (120, 220) and dragging the first entity (220) to a second entity (120) of the plurality of entities, wherein a first application icon (210) is displayed inside the first entity (220), and a second application icon (110) is displayed inside the second entity (120);
determining a distance between the selected first entity and the second entity while selecting and dragging the first entity;
displaying a first visual feedback informing that the selected first entity and the second entity will be merged if the selected first entity is released while the distance is less than a first threshold distance;
merging the first entity (220) with the second entity (120) to create a merged entity (120) and displaying the first application icon (210) and the second application icon (110) inside the merged entity (120) if the selected first entity is the released while the distance is less than the first threshold distance while continuing to display the remaining entities and all their enclosed application icons; and
displaying a second visual feedback informing that the merging is cancelled if the selected first entity is dragged further apart from the second entity than a second threshold distance while the first visual feedback is displayed.

11. The display device of claim 10, wherein the memory (1506) further stores computer program instructions for:

determining a display size of the merged entity based on the number of application icons included in the merged entity; and
displaying the merged entity in accordance with the determined display size.

12. A non-transitory computer-readable storage medium having stored thereon computer program instructions which, when executed in at least one processor, cause the computer to perform the method of any one claims 1 through 9.

**Patentansprüche**

1. Verfahren zum Betreiben einer Anzeigevorrichtung (1500, 1600), das Verfahren umfassend:

Anzeigen einer Vielzahl von Entitäten (120, 220) auf einem Anwendungsauswahlbildschirm (100), wobei jede Entität (120, 220) mindestens ein Anwendungssymbol (110, 210) im Inneren umschließt, wobei jedes Anwendungssymbol einer jeweiligen Anwendung entspricht;
Empfangen einer ersten Eingabe, die eines der Anwendungssymbole (110, 210) innerhalb einer Entität auswählt, die mindestens ein Anwendungssymbol umschließt, während der Anwendungsauswahlbildschirm (100) weiterhin angezeigt wird;
Ausführen der Anwendung, die dem ausgewählten Anwendungssymbol entspricht, als Reaktion auf die erste Eingabe;
Empfangen einer zweiten Berührungseingabe (230), die eine erste Entität (220) der Vielzahl von Entitäten (120, 220) auswählt und Ziehen der ersten Entität (220) zu einer zweiten Entität (120) der Vielzahl von Entitäten, wobei ein erstes Anwendungssymbol (210) innerhalb der ersten Entität (220) angezeigt wird und ein zweites Anwendungssymbol (110) innerhalb der zweiten Entität (120) angezeigt wird;

Bestimmen eines Abstands zwischen der ausgewählten ersten Entität und der zweiten Entität während des Auswählens und Ziehens der ersten Entität;

Anzeigen einer ersten visuellen Rückmeldung, die darüber informiert, dass die ausgewählte erste Entität und die zweite Entität zusammengeführt werden, wenn die ausgewählte erste Entität freigegeben wird, während der Abstand kleiner als ein erster Schwellenabstand ist;

Zusammenführen der ersten Entität (220) mit der zweiten Entität (120), um eine zusammengeführte Entität (120) zu schaffen, und Anzeigen des ersten Anwendungssymbols (210) und des zweiten Anwendungssymbols (110) innerhalb der zusammengeführten Entität (120), wenn die ausgewählte erste Entität die freigegebene ist, während der Abstand kleiner ist als der erste Schwellenabstand, während die verbleibenden Entitäten und alle ihre umschlossenen Anwendungssymbole weiterhin angezeigt werden; und

Anzeigen einer zweiten visuellen Rückmeldung, die darüber informiert, dass das Zusammenführen abgebrochen wird, wenn die ausgewählte erste Entität weiter von der zweiten Entität weggezogen wird als ein zweiter Schwellenabstand, während die erste visuelle Rückmeldung angezeigt wird.

2. Verfahren nach Anspruch 1, ferner umfassend:

Bestimmen einer Anzeigegröße der zusammengeführten Entität (120) basierend auf der Anzahl der Anwendungssymbole (110, 210), die innerhalb der zusammengeführten Entität angezeigt werden; und

Anzeigen der zusammengeführten Entität gemäß der bestimmten Anzeigegröße.

3. Verfahren nach Anspruch 2, wobei das Bestimmen der Anzeigegröße ein Begrenzen der Anzeigegröße der zusammengeführten Entität auf eine maximale Anzeigegröße umfasst, wobei die maximale Anzeigegröße auf einer Obergrenze basiert.

4. Verfahren nach Anspruch 1, ferner umfassend:

Bestimmen einer maximalen Anzahl von Anwendungssymbolen, die innerhalb der zusammengeführten Entität angezeigt werden sollen; und

Anzeigen einer Anzahl von Anwendungssymbolen innerhalb der zusammengeführten Entität, wobei die Anzahl von Anwendungssymbolen geringer ist als die maximale Anzahl.

5. Verfahren nach Anspruch 1, wobei das Anzeigen Folgendes umfasst:

Anzeigen der Entitäten als dreidimensionale Objekte (420) und

Anzeigen von zwei oder mehreren der Anwendungssymbole (411, 412, 413) innerhalb der Entitäten (420) auf eine Weise, die angibt, dass die zwei oder mehreren Anwendungssymbole (411, 412, 413) unterschiedliche Tiefen aufweisen.

6. Verfahren nach Anspruch 5, ferner umfassend:

Bestimmen einer neuen Anordnung der zwei oder mehreren Anwendungssymbole (411, 412, 413) gemäß einer Benutzereingabe zum Drehen der Entitäten (420); und

Anzeigen der zwei oder mehreren Anwendungssymbole (411, 412, 413) unter Verwendung der neuen Anordnung, während der Anwendungsauswahlbildschirm (100) weiterhin angezeigt wird.

7. Verfahren nach Anspruch 1, wobei das Anzeigen Folgendes umfasst:

Anzeigen der Entitäten (120, 220) als zweidimensionale Objekte;

Bestimmen einer neuen Anordnung der Anwendungssymbole, die in den Entitäten beinhaltet sind, gemäß einer Benutzereingabe eines Scrollens durch die Entitäten; und

Anzeigen der Anwendungssymbole, die in der einen oder den mehreren Entitäten beinhaltet sind, unter Verwendung der neuen Anordnung, während der Anwendungsauswahlbildschirm (100) weiterhin angezeigt wird.

8. Verfahren nach Anspruch 1, ferner umfassend:

Empfangen einer Eingabe (330), die ein erstes Anwendungssymbol (210) auswählt, das innerhalb einer ersten (220) der Entitäten angezeigt wird, wobei ein zweites Anwendungssymbol (110) innerhalb der ersten Entität (220) angezeigt wird;

Empfangen einer Eingabe (330), die das erste Anwendungssymbol (210) außerhalb der ersten Entität (220) zieht;

Schaffen einer zweiten Entität (320); und

Anzeigen des zweiten Anwendungssymbols (110) innerhalb der ersten Entität (220) und des ersten Anwendungssymbols (210) innerhalb der zweiten Entität (320).

9. Verfahren nach Anspruch 1, ferner umfassend:

Bestimmen einer neuen Anzeigegröße der Entitäten (120, 220, 320, 420) basierend auf einer Benutzereingabe zum Ändern einer Größe der Entitäten; und

Anzeigen der Entitäten gemäß der bestimmten neuen Anzeigegröße.

10. Anzeigevorrichtung (1500, 1600), umfassend:

eine Anzeigeeinheit (1502, 1601);
mindestens einen Prozessor (1504); und
einen Speicher (1506), der konfiguriert ist, um Computerprogrammanweisungen zu speichern, die von dem mindestens einen Prozessor (1504) ausgeführt werden können, einschließlich Computerprogrammanweisungen zu Folgendem:

Anzeigen einer Vielzahl von Entitäten (120, 220) auf einem Anwendungsauswahlbildschirm (100), wobei jede Entität mindestens ein Anwendungssymbol (110, 210) im Inneren umschließt, wobei jedes Anwendungssymbol einer jeweiligen Anwendung entspricht;
Empfangen einer ersten Eingabe, die eines der Anwendungssymbole (110, 210) innerhalb einer Entität auswählt, die mindestens ein Anwendungssymbol umschließt, während der Anwendungsauswahlbildschirm (100) weiterhin angezeigt wird;
Ausführen der Anwendung, die dem ausgewählten Anwendungssymbol entspricht, als Reaktion auf die erste Eingabe;
Empfangen einer zweiten Berührungseingabe (230), die eine erste Entität (220) der Vielzahl von Entitäten (120, 220) auswählt und Ziehen der ersten Entität (220) zu einer zweiten Entität (120) der Vielzahl von Entitäten, wobei ein erstes Anwendungssymbol (210) innerhalb der ersten Entität (220) angezeigt wird und ein zweites Anwendungssymbol (110) innerhalb der zweiten Entität (120) angezeigt wird;
Bestimmen eines Abstands zwischen der ausgewählten ersten Entität und der zweiten Entität während des Auswählens und Ziehens der ersten Entität;
Anzeigen einer ersten visuellen Rückmeldung, die darüber informiert, dass die ausgewählte erste Entität und die zweite Entität zusammengeführt werden, wenn die ausgewählte erste Entität freigegeben wird, während der Abstand kleiner als ein erster Schwellenabstand ist;
Zusammenführen der ersten Entität (220) mit der zweiten Entität (120), um eine zusammengeführte Entität (120) zu schaffen, und Anzeigen des ersten Anwendungssymbols (210) und des zweiten Anwendungssymbols (110) innerhalb der zusammengeführten Entität (120), wenn die ausgewählte erste Entität die freigegebene ist, während der Abstand kleiner ist als der erste Schwellenabstand, während die verbleibenden Entitäten und alle ihre umschlossenen Anwendungssymbole weiterhin angezeigt werden; und
Anzeigen einer zweiten visuellen Rückmeldung, die darüber informiert, dass das Zusammenführen abgebrochen wird, wenn die ausgewählte erste Entität weiter von der zweiten Entität weggezogen wird als ein zweiter Schwellenabstand, während die erste visuelle Rückmeldung angezeigt wird.

11. Anzeigevorrichtung nach Anspruch 10, wobei der Speicher (1506) ferner Computerprogrammanweisungen zu Folgendem speichert:

Bestimmen einer Anzeigegröße der zusammengeführten Entität basierend auf der Anzahl der Anwendungssymbole, die in der zusammengeführten Entität beinhaltet sind; und
Anzeigen der zusammengeführten Entität gemäß der bestimmten Anzeigegröße.

12. Nicht-transitorisches, computerlesbares Speichermedium, auf dem Computerprogrammanweisungen gespeichert sind, die, wenn sie in mindestens einem Prozessor ausgeführt werden, den Computer veranlassen, das Verfahren nach einem der Ansprüche 1 bis 9 auszuführen.

**Revendications**

1. Procédé de fonctionnement d'un dispositif d'affichage (1500, 1600), le procédé comprenant :

l'affichage d'une pluralité d'entités (120, 220) sur un écran de sélection d'application (100), chaque entité (120, 220) renfermant au moins une icône d'application (110, 210) à l'intérieur, chaque icône d'application correspondant à une application respective ;
la réception d'une première entrée sélectionnant l'une des icônes d'application (110, 210) dans une entité renfermant au moins une icône d'application, tout en continuant à afficher l'écran de sélection d'application (100) ;
l'exécution de l'application correspondant à l'icône d'application sélectionnée, en réponse à la première entrée ;
la réception d'une seconde entrée tactile (230) sélectionnant une première entité (220) de la pluralité d'entités (120, 220) et faisant glisser la première entité (220) vers une seconde entité (120) de la pluralité d'entités, une première icône d'application (210) étant affichée à l'intérieur de la première entité (220), et une seconde icône d'application (110) étant affichée à l'intérieur de la seconde entité (120) ;

la détermination de la distance entre la première entité sélectionnée et la seconde entité tout en sélectionnant et en faisant glisser la première entité ;

l'affichage d'un premier retour visuel informant que la première entité sélectionnée et la seconde entité seront fusionnées si la première entité sélectionnée est libérée alors que la distance est inférieure à une première distance seuil ;

la fusion de la première entité (220) avec la seconde entité (120) pour créer une entité fusionnée (120) et afficher la première icône d'application (210) et la seconde icône d'application (110) à l'intérieur de l'entité fusionnée (120) si la première entité sélectionnée est la libérée alors que la distance est inférieure à la première distance seuil tout en continuant à afficher les entités restantes et toutes leurs icônes d'application jointes ; et

l'affichage d'un second retour visuel informant que la fusion est annulée si la première entité sélectionnée est glissée plus loin de la seconde entité qu'une seconde distance seuil alors que le premier retour visuel est affiché.

2. Procédé selon la revendication 1, comprenant en outre :

la détermination d'une taille d'affichage de l'entité fusionnée (120) en fonction du nombre d'icônes d'application (110, 210) affichées à l'intérieur de l'entité fusionnée ; et

l'affichage de l'entité fusionnée conformément à la taille d'affichage déterminée.

3. Procédé selon la revendication 2, ladite détermination de la taille d'affichage comprenant la limitation de la taille d'affichage de l'entité fusionnée à une taille d'affichage maximale, ladite taille d'affichage maximale étant basée sur une limite supérieure.

4. Procédé selon la revendication 1, comprenant en outre :

la détermination d'un nombre maximal d'icônes d'application devant être affiché à l'intérieur de l'entité fusionnée ; et

l'affichage d'un certain nombre d'icônes d'application à l'intérieur de l'entité fusionnée, ledit nombre d'icônes d'application étant inférieur au nombre maximal.

5. Procédé selon la revendication 1, ledit affichage comprenant :
l'affichage des entités sous la forme d'objets tridimensionnels (420), et l'affichage d'au moins deux des icônes d'application (411, 412, 413) à l'intérieur des entités (420) d'une manière qui indique que lesdites au moins deux icônes d'application (411, 412, 413) ont des profondeurs différentes.

6. Procédé selon la revendication 5, comprenant en outre :

la détermination d'un nouvel agencement desdites au moins deux icônes d'application (411, 412, 413) conformément à une entrée utilisateur pour la rotation des entités (420) ; et

l'affichage desdites au moins deux icônes d'application (411, 412, 413) en utilisant le nouvel agencement, tout en continuant à afficher l'écran de sélection d'application (100).

7. Procédé selon la revendication 1, ledit affichage comprenant :

l'affichage des entités (120, 220) sous la forme d'objets bidimensionnels ; la détermination d'un nouvel agencement des icônes d'application incluses dans les entités conformément à une entrée utilisateur permettant de faire défiler les entités ; et

l'affichage des icônes d'application incluses dans lesdites une ou plusieurs entités en utilisant le nouvel agencement, tout en continuant à afficher l'écran de sélection d'application (100).

8. Procédé selon la revendication 1, comprenant en outre :

la réception d'une entrée (330) sélectionnant une première icône d'application (210) affichée à l'intérieur d'une première (220) des entités, une seconde icône d'application (110) étant affichée à l'intérieur de la première entité (220) ;

la réception d'une entrée (330) faisant glisser la première icône d'application (210) à l'extérieur de la première entité (220) ;

la création d'une seconde entité (320) ; et

l'affichage de la seconde icône d'application (110) à l'intérieur de la première entité (220) et de la première icône d'application (210) à l'intérieur de la seconde entité (320).

9. Procédé selon la revendication 1, comprenant en outre :

la détermination d'une nouvelle taille d'affichage des entités (120, 220, 320, 420) en fonction d'une entrée utilisateur pour redimensionner les entités ; et

l'affichage des entités conformément à la nouvelle taille d'affichage déterminée.

10. Dispositif d'affichage (1500, 1600) comprenant :

une unité d'affichage (1502, 1601) ;
au moins un processeur (1504) ; et
une mémoire (1506) configurée pour stocker des instructions de programme informatique exécutables par ledit au moins un processeur (1504), comprenant des instructions de programme informatique pour :

afficher une pluralité d'entités (120, 220) sur un écran de sélection d'application (100), chaque entité renfermant au moins une icône d'application (110, 210) à l'intérieur, chaque icône d'application correspondant à une application respective ;
recevoir une première entrée sélectionnant l'une des icônes d'application (110, 210) au sein d'une entité renfermant au moins une icône d'application tout en continuant à afficher l'écran de sélection d'application (100) ;
exécuter l'application correspondant à l'icône d'application sélectionnée, en réponse à la première entrée ;
recevoir une seconde entrée tactile (230) sélectionnant une première entité (220) de la pluralité d'entités (120, 220) et faisant glisser la première entité (220) vers une seconde entité (120) de la pluralité d'entités, une première icône d'application (210) étant affichée à l'intérieur de la première entité (220), et une seconde icône d'application (110) étant affichée à l'intérieur de la seconde entité (120) ;
déterminer la distance entre la première entité sélectionnée et la seconde entité tout en sélectionnant et en faisant glisser la première entité ;
afficher un premier retour visuel informant que la première entité sélectionnée et la seconde entité seront fusionnées si la première entité sélectionnée est libérée alors que la distance est inférieure à une première distance seuil ;
fusionner la première entité (220) avec la seconde entité (120) pour créer une entité fusionnée (120) et afficher la première icône d'application (210) et la seconde icône d'application (110) à l'intérieur de l'entité fusionnée (120) si la première entité sélectionnée est la libérée alors que la distance est inférieure à la première distance seuil tout en continuant à afficher les entités restantes et toutes leurs icônes d'application jointes ; et
afficher un second retour visuel informant que la fusion est annulée si la première entité sélectionnée est glissée plus loin de la seconde entité qu'une seconde distance seuil alors que le premier retour visuel est affiché.

11. Dispositif d'affichage selon la revendication 10, ladite mémoire (1506) stockant en outre des instructions de programme informatique pour :

déterminer une taille d'affichage de l'entité fusionnée en fonction du nombre d'icônes d'application incluses dans l'entité fusionnée ; et
afficher l'entité fusionnée conformément à la taille d'affichage déterminée.

12. Support de stockage non transitoire lisible par ordinateur sur lequel sont stockées des instructions de programme informatique qui, lorsqu'elles sont exécutées dans au moins un processeur, amènent l'ordinateur à exécuter le procédé selon l'une quelconque des revendications 1 à 9.

[Fig. 1]

[Fig. 2A]

[Fig. 2B]

[Fig. 2C]

[Fig. 3A]

[Fig. 3B]

[Fig. 3C]

[Fig. 4A]

[Fig. 4B]

[Fig. 4C]

[Fig. 5A]

[Fig. 5B]

[Fig. 6A]

[Fig. 6B]

[Fig. 7]

100

APPLICATIONS

| | | |
|---|---|---|
| SMS | STORE | 9 Jun CALENDAR |
| 720 → E-MAIL PHONE SMS | | VOICE |
| INTERNET | ? SEARCH | GAME |
| | | |

[Fig. 8A]

820

| 9 Jun CALENDAR | SMS |
|---|---|
| VOICE | PHONE |

← 830

[Fig. 8B]

820

ENDAR   SMS   STOR

830

OICE   PHONE   MAP

[Fig. 8C]

820

SMS   STORE

PHONE   MAPS

[Fig. 9]

| DISPLAY APPLICATION SELECTION SCREEN INCLUDING AT LEAST ONE GROUP ENTITY | S901 |

| RECEIVE USER INPUT WHICH SELECTS APPLICATION ICON FROM ANY ONE OF PLURALITY OF ENTITIES INCLUDING THE GROUP ENTITY, WHILE CONTINUING TO DISPLAY APPLICATION SELECTION SCREEN | S902 |

| EXECUTE APPLICATION ASSOCIATED WITH SELECTED APPLICATION ICON IN RESPONSE TO USER INPUT | S903 |

[Fig. 10]

```
┌─────────────────────────────────────────────────────────┐
│         DISPLAY APPLICATION SELECTION SCREEN              │ ─── S1001
│          INCLUDING AT LEAST ONE GROUP ENTITY             │
└─────────────────────────────────────────────────────────┘
                            │
                            ▼
┌─────────────────────────────────────────────────────────┐
│      RECEIVE USER INPUT INCLUDING REQUEST FOR ONE OF     │
│   PLURALITY OF ENTITIES TO ROTATE THREE-DIMENSIONAL      │ ─── S1002
│   OBJECT WHILE CONTINUING TO DISPLAY APPLICATION         │
│               SELECTION SCREEN                            │
└─────────────────────────────────────────────────────────┘
                            │
                            ▼
┌─────────────────────────────────────────────────────────┐
│     DETERMINE NEW ARRANGEMENT OF APPLICATION ICONS       │
│  WITHIN ENTITY BASED ON ROTATION OF THREE-DIMENSIONAL    │ ─── S1003
│        OBJECT IN ACCORDANCE WITH USER INPUT              │
└─────────────────────────────────────────────────────────┘
                            │
                            ▼
┌─────────────────────────────────────────────────────────┐
│  DISPLAY AGAIN ENTITY USING NEW ARRANGEMENT OF           │
│  APPLICATION ICONS WHILE CONTINUING TO DISPLAY           │ ─── S1004
│         APPLICATION SELECTION SCREEN                     │
└─────────────────────────────────────────────────────────┘
```

[Fig. 11]

DISPLAY APPLICATION SELECTION SCREEN — S1101

↓

RECEIVE USER INPUT SELECTING FIRST ENTITY WHILE DISPLAYING APPLICATION SELECTION SCREEN — S1102

↓

MOVE SELECTED FIRST ENTITY AROUND APPLICATION SELECTION SCREEN IN ACCORDANCE WITH MOVEMENT OF USER INPUT — S1103

↓

REPEATEDLY CHECK DISTANCE BETWEEN SELECTED FIRST ENTITY AND NEAREST ENTITY WHILE MOVING SELECTED FIRST ENTITY — S1104

↓

S1105 DISTANCE BETWEEN SELECTED FIRST ENTITY AND THE NEAREST ENTITY < C1 — NO (loops back to S1103)

YES ↓

DETERMINE DISPLAY SIZE FOR MERGED ENTITY BASED NUMBER OF APPLICATION ICONS TO BE DISPLAYED IN MERGED ENTITY — S1106

↓

DISPLAY MERGE ANIMATION TO INDICATE MERGING OF FIRST AND SECOND ENTITIES INTO GROUP ENTITY — S1107

↓

RECEIVE EVENT RELEASING FIRST ENTITY — S1108

↓

CHECK DISTANCE TO NEAREST OTHER ENTITY FROM FIRST ENTITY AGAIN — S1109

↓

S1110 DISTANCE TO NEAREST OTHER ENTITY FROM FIRST ENTITY < C2 — NO

YES ↓

DISPLAY APPLICATION SELECTION SCREEN BY REMOVING FIRST ENTITY AND SECOND ENTITY FROM APPLICATION SELECTION SCREEN AND DISPLAYING MERGED ENTITY WHICH INCLUDES APPLICATION ICONS FROM FIRST ENTITY AND SECOND ENTITY — S1111

DISPLAY APPLICATION SELECTION SCREEN WITH FIRST ENTITY SEPARATE FROM OTHER ENTITIES WITHOUT MERGING FIRST ENTITY WITH ANOTHER ENTITY — S1112

[Fig. 12]

DISPLAY APPLICATION SELECTION SCREEN — S1201

↓

RECEIVE USER INPUT SELECTING FIRST ENTITY WHILE DISPLAYING APPLICATION ICON FROM GROUP ENTITY — S1202

↓

MOVE APPLICATION ICON AROUND APPLICATION SELECTION SCREEN — S1203

↓

S1204 — DISTANCE BETWEEN GROUP ENTITY AND SELECTED APPLICATION ICON > C3

NO → (back to S1203)

YES ↓

CREATE NEW ENTITY TO DISPLAY SELECTED APPLICATION ICON — S1205

↓

DETERMINE NEW DISPLAY SIZE FOR ORIGINAL ENTITY — S1206

↓

DISPLAY SPLIT ANIMATION TO INDICATE CREATION OF NEW ENTITY — S1207

↓

RECEIVE RELEASE EVENT FOR SELECTED APPLICATION ICON — S1208

↓

S1209 — DISTANCE BETWEEN GROUP ENTITY AND SELECTED APPLICATION ENTITY > C4

NO →

YES ↓

DISPLAY APPLICATION SELECTION SCREEN BY DISPLAYING ORIGINAL ENTITY WITH SELECTED APPLICATION ICON REMOVED, AND DISPLAYING SELECTED APPLICATION ICON IN NEWLY-CREATED ENTITY — S1210

CONTINUE TO DISPLAY APPLICATION SELECTION SCREEN WITHOUT SPLITTING ORIGINAL ENTITY — S1211

EP 3 191 927 B1

28

[Fig. 13]

| | |
|---|---|
| DISPLAY ENTITIES AS 2D REPRESENTATIONS OF 3D OBJECTS ON APPLICATION SELECTION SCREEN | S1301 |
| RECEIVE USER INPUT INCLUDING REQUEST TO RESIZE A GROUP ENTITY | S1302 |
| DETERMINE NEW DISPLAY SIZE FOR ENTITY IN ACCORDANCE WITH THE USER INPUT | S1303 |
| DETERMINE NEW ARRANGEMENT OF APPLICATION ICONS WITHIN 3D OBJECT IN ACCORDANCE WITH NEW DISPLAY SIZE | S1304 |
| DISPLAY ENTITY AGAIN ACCORDING TO NEW DISPLAY SIZE, AND USING NEW ARRANGEMENT OF APPLICATION ICONS | S1305 |

[Fig. 14]

| | |
|---|---|
| DISPLAY 2D GROUP ENTITY WITH UP TO MAXIMUM NUMBER N APPLICATION ICONS ARRANGED ON TWO-DIMENSIONAL GRID WITHIN THE 2D GROUP ENTITY | S1401 |
| RECEIVE USER INPUT COMPRISING REQUEST TO SCROLL THROUGH PLURALITY OF APPLICATION ICONS WITHIN ENTITY | S1402 |
| SCROLL APPLICATION ICONS IN DIRECTION INDICATED BY USER INPUT, TO DISPLAY ONE OR MORE OF APPLICATION ICONS THAT WERE NOT PREVIOUSLY DISPLAYED | S1403 |

[Fig. 15]

1500

DISPLAY DEVICE

1502
DISPLAY

1504
PROCESSOR

1506
MEMORY

1508
USER INTERFACE

[Fig. 16]

1600

DISPLAY DEVICE

1601
DISPLAY

1602
RECEIVER

1603
PROCESSOR

REFERENCES CITED IN THE DESCRIPTION

**Patent documents cited in the description**

- EP 2426898 A